# EUROPEAN PATENT SPECIFICATION

(11) **EP 3 442 177 B1**
(45) Date of publication and mention of the grant of the patent: **07.10.2020**
(21) Application number: 17185836.8
(22) Date of filing: 11.08.2017
(51) Int. Cl.: H04L 12/733, H04L 12/721, H04W 64/00, H04W 40/12, H04W 40/20, H04W 40/24, H04W 16/18, H04W 84/18, H04W 88/16

(54) **METHOD AND ARRANGEMENT FOR OPTIMISING THE LOCATION OF A NODE IN A MESH NETWORK**
VERFAHREN UND ANORDNUNG ZUR OPTIMIERUNG DES STANDORTS EINES KNOTENS IN EINEM MESH-NETZWERK
PROCÉDÉ ET AGENCEMENT POUR OPTIMISER L'EMPLACEMENT D'UN NOEUD DANS UN RÉSEAU MAILLÉ

(43) Date of publication of application: 13.02.2019
(73) Proprietor: Helvar Oy Ab, 02150 Espoo (FI)
(72) Inventor: AHOLA, Jukka, 02150 Espoo (FI); VESTERINEN, Matti, 02150 Espoo (FI)
(74) Representative: Berggren Oy, Helsinki & Oulu

(56) References cited:
- WO-A1-2013/056418
- US-A1- 2003 095 504
- US-A1- 2003 117 966
- KAZUNORI MIYOSHI ET AL: "Fully Distributed Self-Organization of Shortest Spanning Tree and Optimal Sink Node Position for Large-Scale Wireless Sensor Network", IEICE TRANSACTIONS ON COMMUNICATIONS, COMMUNICATIONS SOCIETY, TOKYO, JP, vol. E95B, no. 2, 1 February 2012 (2012-02-01), pages 449-459, XP001573048, ISSN: 0916-8516, DOI: 10.1587/TRANSCOM.E95.B.449 [retrieved on 2012-02-01]
- SNIGDH I ET AL: "Optimal sink placement in backbone assisted wireless sensor networks", EGYPTIAN INFORMATICS JOURNAL, ELSEVIER, AMSTERDAM, NL, vol. 17, no. 2, 24 December 2015 (2015-12-24), pages 217-225, XP029627779, ISSN: 1110-8665, DOI: 10.1016/J.EIJ.2015.09.004

## Description

### FIELD OF THE INVENTION

The invention relates to optimising the operation of wireless networks. In particular the invention relates to finding the optimal location for a node of particular importance in a wireless mesh network.

### BACKGROUND OF THE INVENTION

A wireless mesh network is one where at least a significant proportion of the nodes communicate through wireless communications, and where at least a significant proportion of the nodes relay transmissions of others. The relaying ensures efficient distribution of data and allows forming and maintaining the network with little or no preparatory configuration, for which reason a mesh topology is well suited for ad-hoc networking.

A particularly important node of a wireless mesh network may be for example a gateway that forms a communications connection between the wireless mesh network and other networks such as the Internet. Particular importance may be associated also with other types of nodes, such as a controller node that can send control commands, program updates, or other highly important data to the other nodes, or a sensor node that produces triggering signals that should have immediate effect on the operation of a number of other nodes. As a general characterisation a particularly important node can be said to be a node capable of performing one or more operations that have an effect on the operation of other nodes and that go beyond the average capability of nodes in the wireless mesh network. A common requirement is that the physical location of the particularly important node should be optimised, so that the communications between it and the rest of the nodes are as fluent as possible.

As an example we may consider a wireless mesh network of building automation devices. In particular, we may consider the task of constructing a lighting system where the luminaires, sensors, controllers, and other individual components act as nodes of a wireless mesh network. Such a situation arises for example in intelligent lighting, where the operation of the luminaires adapts to the observed behaviour of users. Although some recommended practices may exist for placing the nodes, more or less every space to be illuminated involves unique factors like general architecture, partitions of rooms and other spaces, materials used in interior design, need of light in different parts of the space, and others. Thus it is not possible to give a generally valid rule for selecting the location of e.g. a gateway or a controller. Additionally the signal propagation conditions and other factors that affect the efficient communications between nodes of the lighting system may change over time, so a location that was found to work well earlier may prove to be highly disadvantageous after some time has passed.

In related art, Kazunori Miyoshi et al., "Fully Distributed Self-Organization of Shortest Spanning Tree and Optimal Sink Node Position for Large-Scale Wireless Sensor Networks", IEICE Transactions on Communications, vol. E95-B, no. 2, February 2012, pages 449-459, ISSN: 0916-8516 discloses an algorithm for determining an optimal sink node position. According to the authors, the primary challenges faced by wireless sensor networks are how to construct the shortest spanning tree and how to determine the optimal sink node position in terms of minimizing the data transmission times and their variances for data gathering from all sensor nodes to a sink node. To solve these two problems, the authors propose a novel algorithm that uses the polygonal affine shortening algorithm with flow aggregation. This algorithm enables a wireless sensor network that has movable sensor nodes and one movable sink node to self-organize the shortest spanning tree and self-determine the optimal sink node position in a fully distributed manner

Further in related art, I. Snigdh et al., "Optimal sink placement in backbone assisted wireless sensor networks", Egyptian Informatics Journal, vol. 17, no. 2, 24 December 2015, pages 217-225, ISSN: 1110-8665 discloses a scheme for selecting the best site for sink placement in WSN applications employing backbone assisted communications. By placing the sink at a specific position, energy scavenging and delay constraints can effectively be controlled. In contrast to the conventional scheme for base station placement at the geographical centre or random placement at the end of the region of interest, the proposed scheme places the base station at either the graph theoretical centre or centroid of the backbone connecting nodes in the region of interest. This strategy shows a considerable reduction in the total number of hops that each packet needs to travel to reach the sink.

### SUMMARY OF THE INVENTION

It is an objective of the present invention to provide a method and a controlling device for selecting a location for a particularly important node of a wireless mesh network so that communications to and/or from the selected location to nodes of the wireless mesh network are fluent. It is a particular objective of the invention that the execution of the method can be automatized in the controlling device. Another objective of the invention is that the execution of the method can be streamlined through user interaction. Yet another objective of the invention is to ensure that the method is scalable to various sizes of wireless mesh networks.

According to an aspect of the invention there is provided a method for selecting a location for a particularly important node of a wireless mesh network. The method comprises the steps that are recited in the independent claim directed to a method.

According to another aspect of the invention there is provided a control device of a wireless mesh network. The control device is characterised by the features that are recited in the independent claim directed to a control device.

According to another aspect of the invention there is provided a computer program that is characterised by the features that are recited in the independent claim directed to a computer program.

The computer program may be embodied on a volatile or a non-volatile computer-readable record medium, for example as a computer program product comprising at least one computer readable non-transitory medium having program code stored thereon, the program code, which when executed by an apparatus, causes the apparatus at least to perform the operations described herein for the computer program in accordance with the respective aspect of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

- Figure 1: illustrates an example of the propagation of messages in a wireless mesh network,
- figure 2: illustrates another example of the propagation of messages in a wireless mesh network,
- figure 3: illustrates another example of the propagation of messages in a wireless mesh network,
- figure 4: illustrates another example of the propagation of messages in a wireless mesh network,
- figure 5: illustrates another example of the propagation of messages in a wireless mesh network,
- figure 6: illustrates another example of the propagation of messages in a wireless mesh network, and
- figure 7: illustrates components of a lighting system.

### DETAILED DESCRIPTION

In this text the phrase "particularly important node" is used for a node for which an optimal location should be found in a wireless mesh network. The concept of importance may be quite relative, so the phrase should be taken merely as just a name or an unequivocal designation of a node under consideration. The node for which a location should be selected could be alternatively called just a "new node", "additional node", "node under consideration" or the like.

While the need for fluent communications is more or less common to all nodes of a wireless mesh network, there may be different criteria for selecting the location of nodes of different type. For example a node that takes the form of a luminaire is mainly placed according to the requirement that it must provide proper illumination to a certain area, and a node containing a sensor is placed so that the sensor sees the area to be observed or has otherwise the required access to the quantity to be sensed. A node that is meant with the name "particularly important node" is typically one that has fewer physical constraints concerning its location, although certain physical constraints like access to operating power and/or to a wired communications connection with other networks may apply. In any case the "particularly important node" is assumed to be one for which several possible locations within the wireless mesh network could be selected; otherwise the whole process of selecting a location would have little reason to it.

An "ordinary" node of the wireless mesh network may not need very fast communications connections to a large number of other nodes in the network, while a "particularly important" node is one that should, for one reason or another, be capable of exchanging commands, announcements, downloads, and/or other kinds of messages with (or unidirectionally delivering them to, or unidirectionally gathering them from) all other nodes of the wireless mesh network (or a certain portion of it) as fluently as possible. An example of a particularly important node is a gateway that constitutes the connection point between a wireless mesh network and other communications networks.

The concept of location can be viewed as a physical location or a logical location. While the aim of the method described in this text is to eventually find an actual physical location, the problem is approached from the viewpoint of logical location in the network; i.e. in relation to the existing nodes and their capability of transmitting and receiving wireless messages between each other. Two nodes that are physically very close to each other may have a long logical separation, if some constraint limits their communications with each other. For example, if the wireless medium of communications is visible light, ultraviolet light, or infrared radiation, and the two nodes are located at the respective ends of two long, parallel corridors, there may be only a thin wall separating them physically but any node-to-node communications must be routed through all other nodes along both corridors because visible light, UV, and IR do not penetrate the wall.

In the present method there is found first a logical location, with the resolution of one existing node, at which the communications with all (or at least a representative portion of) the other nodes are as fluent as possible. The physical installation location for the particularly important node will then be selected to coincide with the location of that existing node at sufficient precision, so that it has essentially the same communications capabilities (in terms of location-dependent physical barriers of signal propagation) as the existing node. Again the role of physical constraints must be considered: there would be little reason to install the particularly important node on the other side of a concrete wall from the found existing node, even if the direct physical separation would this way be in the order of only centimeters, if the concrete wall changes radically the way in which the wireless signals propagate to and from other nodes.

As already pointed out above, the selection of wireless communications medium may have a significant effect on selecting the exact physical location. As such, the invention does not have any limitations concerning what the wireless medium is: it may be for example visible light, infrared light, ultrasound, or radio waves. However, the selection of wireless medium may have radical effects on the nature of transducer used and its exact location in relation to other structures: if e.g. radio waves are selected, selecting the physical location for the particularly important node may mean actually selecting the physical location for just the transmission and reception antenna(s) of the actual node device, while the device itself may be even quite remotely placed from that location. Additionally radio antennas may be placed inside closed containers as long as their walls do not attenuate too much of the radiated energy, while optical sensors must necessarily have direct access to an open space or at least apertures that are either open or covered with highly transparent material.

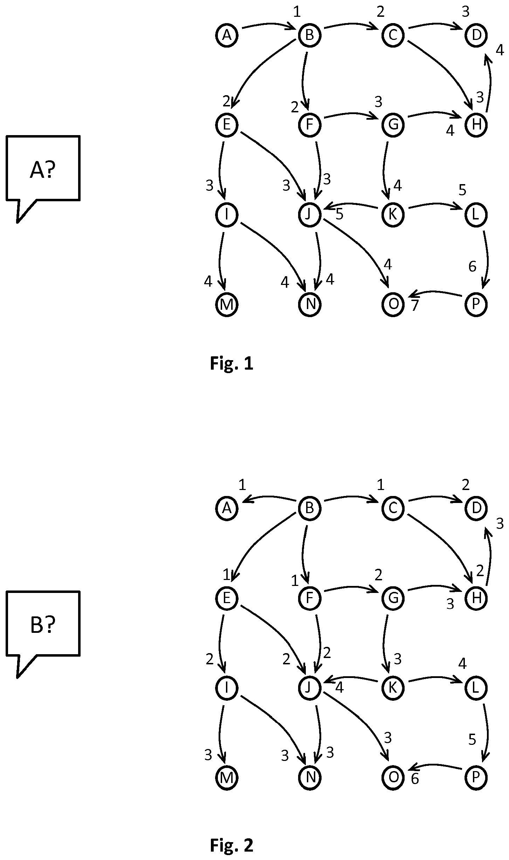

Fig. 1 illustrates schematically an example of a wireless mesh network with 16 nodes marked with capital letters from A to P. These are existing nodes, and the task is to select a location for a particularly important new node so that it could have as fluent communications as possible with all 16 existing nodes.

The method illustrated here comprises instructing the existing individual nodes of the wireless mesh network to transmit specific messages called ranging messages. A ranging message contains at least an identifier of its originator, i.e. the node that originally created and transmitted the ranging message. Following the principle of mesh networking, all other nodes of the wireless mesh network are expected to distribute the ranging message, so that sooner or later it should have reached all other nodes.

Depending on the communications protocol that is in use, the time within which (and the reliability at which) the ranging message reaches even the most distant other nodes in the wireless mesh network may vary. According to an aspect of the invention there is arranged a way of following, how fluently the distribution takes place. For this purpose the ranging message contains a value of an indicator of cumulative communications quality the ranging message has taken through the wireless message. This value may be dynamically changeable by relaying nodes: an example is a value that indicates a hop count along the route the ranging message has taken through the wireless mesh network. Cumulative communications quality means the aggregate quality and reliability of communications between the originator of a message and the point up to which the message has propagated so far. An indicator of cumulative communications quality may be for example a signal strength, the occurrence of transmission errors, transmission delay, messages going lost, or the like. A value of such an indicator is then a number such as a measured signal strength value, a number of detected transmission errors, a numerical representation of transmission delay in units of time or as a hop count, a number of correctly received messages, or the like respectively. In the following example a hop count will be used as the indicator of cumulative communications quality.

In fig. 1 node A is instructed to transmit a ranging message. Node B is closest to node A, and the only other node in the exemplary case of fig. 1 that can receive the ranging message directly from node A. Thus the hop count value in the ranging message is 1 when it reaches node B. An alternative is to use hop count zero in ranging messages coming directly from the originator, so that the hop count is actually the count of relay transmissions by others. The exact definition of the hop count value has no significance, as long as the hop count means some unequivocal way of telling, how many node-to-node hops the relayed ranging message has experienced on its way.

Node B relays the ranging message it received from node A, and the relayed ranging message is received by nodes C, E, and F, now with hop count value 2. Each node relays the ranging message forward, always increasing the hop count value, however so that if the node received what appears to be a copy of the same ranging message from another node it only takes into account the one (or one of those) with the lowest hop count. Thus e.g. when node J receives the relayed ranging message from nodes E and F with hop count 3 and from node K with hop count 5, it only relays it on with hop count 4. If node K receives this relayed ranging message from node J, it ignores it, because it turns out to be just a copy of the same message that node K already received from node G with hop count 4.

In the exemplary case of fig. 1 there are:
- one node (node B) that received the ranging message originating from node A with hop count value 1,
- three nodes (nodes C, E, and F) that received the ranging message originating from node A with hop count value 2,
- five nodes (nodes D, G, H, I, and J) that received the ranging message originating from node A with hop count value 3,
- four nodes (nodes K, M, N, and O) that received the ranging message originating from node A with hop count value 4,
- one node (node L) that received the ranging message originating from node A with hop count value 5, and
- one node (node P) that received the ranging message originating from node A with hop count value 6.

Fig. 2 illustrates the same wireless mesh network and the distribution of an exemplary ranging message that this time originated from node B. To make comparisons easier we assume that the working node-to-node communications connections remain the same all the time. In fig. 2 there are
- four nodes (nodes A, C, E, and F) that received the ranging message originating from node B with hop count value 1,
- five nodes (nodes D, G, H, I, and J) that received the ranging message originating from node B with hop count value 2,
- four nodes (nodes K, M, N, and O) that received the ranging message originating from node B with hop count value 3,
- one node (node L) that received the ranging message originating from node B with hop count value 4,
- one node (node P) that received the ranging message originating from node B with hop count value 5, and
- no nodes that would have received the ranging message originating from node B with hop count value 6 or more.

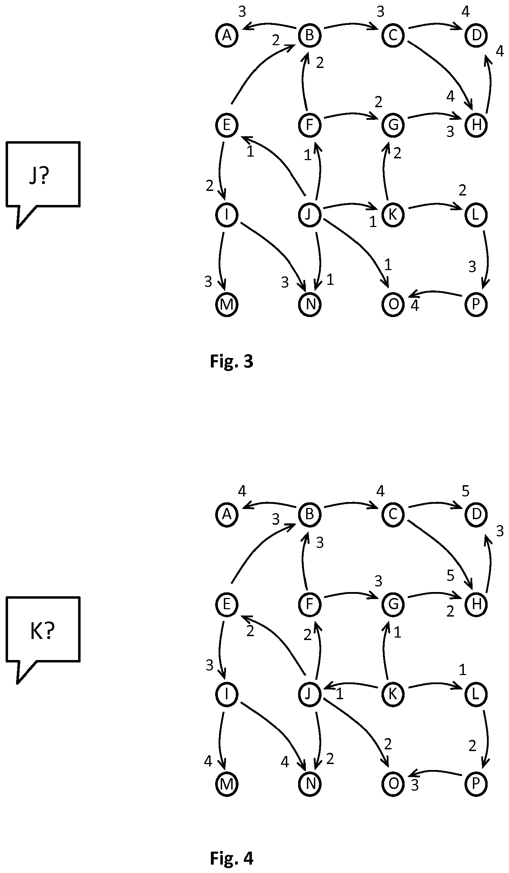

Figs. 3 and 4 illustrate the same wireless mesh network and the distribution of exemplary ranging messages originating from nodes J and K respectively. Collecting the values of the hop counts from the different receiving nodes gives the following tables:

| | | | | | | |
|---|---|---|---|---|---|---|
| Hop count from node A | 1 | 2 | 3 | 4 | 5 | 6 |
| # of nodes | 1 | 3 | 5 | 4 | 1 | 1 |

| | | | | | | |
|---|---|---|---|---|---|---|
| Hop count from node B | 1 | 2 | 3 | 4 | 5 | 6 |
| # of nodes | 4 | 5 | 4 | 1 | 1 | 0 |

| | | | | | | |
|---|---|---|---|---|---|---|
| Hop count from node J | 1 | 2 | 3 | 4 | 5 | 6 |
| # of nodes | 5 | 4 | 5 | 1 | 0 | 0 |

| | | | | | | |
|---|---|---|---|---|---|---|
| Hop count from node K | 1 | 2 | 3 | 4 | 5 | 6 |
| # of nodes | 3 | 6 | 3 | 3 | 0 | 0 |

The method for selecting a location for a particularly important node comprises collecting, from all other nodes or at least from a representative selection of them, values of the indicator that these nodes have received in ranging messages. Considering the hop count example given above, this means collecting from the other nodes the hop count values with which they received the ranging messages from the nodes to be compared. If there is time and/or if there is no reason to limit the node locations to be compared, a full search can be performed: each and every existing node of the wireless mesh network may be instructed to act as the originator of ranging messages, and the hop counts (or other indicator values) with which these ranging messages are received can be collected from all other nodes in each case. Depending on the available bandwidth, the existence of a collision avoidance or collision resolution procedures, and the time available, the instructions to transmit ranging messages may be given to each node in turn, or a number of nodes (or even all nodes) may be instructed to begin transmitting ranging messages at the same time.

When the indicator values have been collected, the method comprises comparing the nodes with respect to what kind of values of the indicator the other nodes received in ranging messages that originated from the compared nodes. The location for the particularly important node should be selected to coincide with the location of that node that proved best in said comparison. In other words, the particularly important node should be placed at or close to the location of that one of the compared nodes that was the originator of ranging messages in which the received values of the indicator indicated best cumulative communications quality.

The criterion of proving best in the comparison may be set in various ways. Considering the hop count example above, the comparing could comprise finding the originator node from which a mean value, median value, or other statistical descriptor of the hop count to receiving nodes was the most advantageous. In the illustrated example the mean value of hop count was 3.27 for node A, 2.33 for node B, 2.13 for node J, and 2.40 for node K, so using the mean value as a statistical descriptor would lead to selecting the location of node J as the location for the particularly important node. The statistical descriptor may be a set of rules concerning the collected values; for example, such a set of rules might require first selecting those originator nodes for which the largest encountered hop count was the smallest, and then if there are several of those selecting the one for which the mean value of hop count was the smallest. Such a set of rules would exclude selecting a node from which the ranging messages propagated to almost all other nodes with a low hop count but took a long and complicated node-to-node hopping path to some small number of more distant nodes, and would favour nodes from which the propagation of ranging messages was more even.

Evaluating the propagation of ranging messages may comprise an aspect of propagation time as a measure of the cumulative communications quality. This has significance in particular if the method aims at selecting the location of the particularly important node so that communications between it and (a respective selection of) the other nodes in the wireless mesh network could succeed in the shortest possible time. To this purpose the indicator of cumulative communications quality in a ranging message may comprise an indication of a moment of time when the originator transmitted the ranging message. Each receiving node would then notice the moment of time at which it first received the ranging message, and the collecting step mentioned above would comprise collecting from the other nodes information about the time it took for the ranging message to be received. The comparing step would comprise finding that originator node from which a statistical descriptor of the time it took for the ranging message to be received was the most advantageous. Again, the shortest mean time could be selected, or the selection could favour an originator node from which even the longest observed time it took for the ranging message to be received had the minimum value, or some set of rules could be applied to make the most educated selection according to a number of simultaneous criteria.

Yet another way of looking for the best originator node in the comparison is related to the reliability of communications. Not all transmitted messages are received successfully in a wireless mesh network, but some messages tend to get lost. In order to test the reliability of communications the method may comprise instructing an individual originator node to transmit a known number of separate ranging messages. The collecting step may comprise collecting, from a number of other nodes in the wireless mesh network, the numbers of ranging messages that these other nodes have received with said individual node as the originator. The comparing step may comprise comparing the nodes of the wireless mesh network with respect to how large proportion of their transmitted ranging messages were successfully received by the other nodes. The selecting step could comprise selecting the location of the particularly important node to coincide with the location of that one of the compared nodes that was the originator of ranging messages of which the largest proportion was successfully received by the other nodes. Also here some set of rules could be applied to make the most educated selection according to a number of simultaneous criteria.

Any combinations of the various embodiments are possible. The method may comprise e.g. both comparing the nodes with respect to the hop count and with respect to the propagation time and/or transmission reliability of the ranging messages.

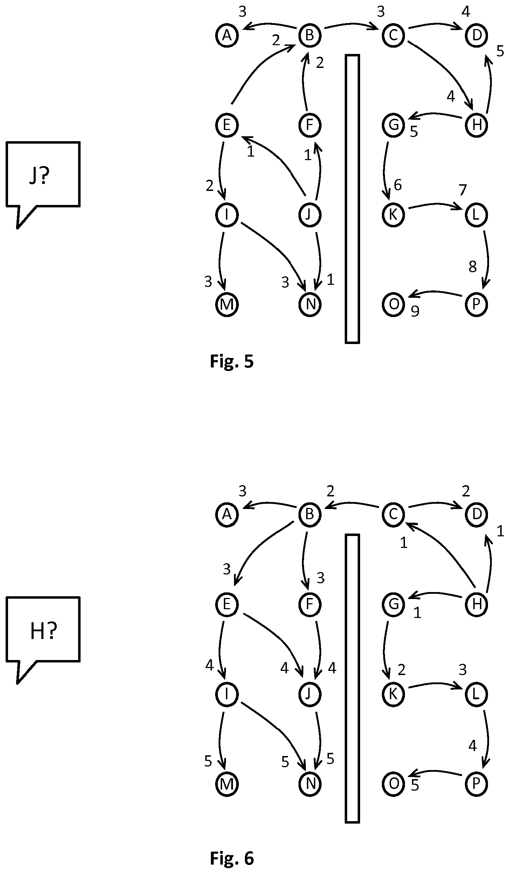

Wireless mesh networks may experience changes in the number and/or locations of nodes, the propagation conditions of the wireless signals, and/or other factors that affect the most favourable location of a particularly important node. This is illustrated in figs. 5 and 6. The wireless mesh network as such is the same as in the previous drawings, but a barrier has appeared that prevents signal propagation on all but the topmost horizontal propagation path between the nodes in the two middle columns. If a hop count table is now calculated for ranging messages originated from node J, the location of which was the previously selected most advantageous location for a particularly important node, the result is

| | | | | | | | | | |
|---|---|---|---|---|---|---|---|---|---|
| Hop count from node J | 1 | 2 | 3 | 4 | 5 | 6 | 7 | 8 | 9 |
| # of nodes | 3 | 2 | 3 | 2 | 1 | 1 | 1 | 1 | 1 |

A hop count table calculated for node H, as shown in fig. 6, gives

| | | | | | | | | | |
|---|---|---|---|---|---|---|---|---|---|
| Hop count from node H | 1 | 2 | 3 | 4 | 5 | 6 | 7 | 8 | 9 |
| # of nodes | 3 | 2 | 4 | 3 | 3 | 0 | 0 | 0 | 0 |

Clearly the location of node H is much more favourable for a particularly important node than that of node J in figs. 5 and 6. In order to ensure that the optimization of the location of the particularly important node remains up to date, it may be advantageous to automatize the method so that it comprises automatically triggering the execution of the steps explained above at the occurrence of a predetermined triggering condition. Such a triggering condition may be for example the expiry of a timer, so that the method for selecting a location for the particularly important node is executed regularly after a predetermined time has passed since the last time. The triggering condition may also be an observed change in communications quality that was reported by at least one node of the wireless mesh network. Manually triggering the execution is also possible, so that the device responsible for initiating the execution of the method does so as a response to a command given by a user.

The method may also comprise receiving from a user a preliminary selection of one or more possible locations for the particularly important node, and only instructing those existing nodes of the wireless mesh network to transmit ranging messages that are located at or close to these one or more possible locations. The user may be aware of e.g. constraints concerning the availability of mains power, so that only those nodes of the wireless mesh network are instructed to transmit ranging messages that are close enough to sufficiently available mains power for the particularly important node. A preliminary selection given by a user may save time, because no such ranging messages need to be transmitted and analyzed that would originate from nodes at locations that are not possible to select for the particularly important node anyway.

The method according to the invention finds particular use in building automation systems, where the configuration and operation of wireless mesh networks is difficult to predict at the accuracy that would be needed to fix the location of a particularly important node by just looking at room layouts. Also the frequent occurrence of changes in indoor environments, like refurbishment of spaces, building of new walls, moving the furniture, changing the working schedules and the like, means that the optimal location of a particularly important node may need to be updated every now and then, and most advantageously with little additional burden to the users. According to an embodiment of the invention if the automatic triggering of the location selection method results in selecting a different location than where the particularly important node is currently located, the system may generate a prompt to a user to take action and consider whether the particularly important node should be moved to the new location.

If a sufficiently detailed digital model of the installation environment is available, the method may be executed also on the virtual level. In such an embodiment a simulation computer may create calculated simulations of messages transmitted from different locations within the digital model, and calculate how these would propagate from node to node, taken that the signal propagation conditions between nodes are those dictated by the digital model. In such an embodiment the concept of an "existing individual node of the wireless mesh network" refers to a node for which a simulated representation (simulated location, as well as simulated transmitting and receiving characteristics) exists within the digital model of the installation environment.

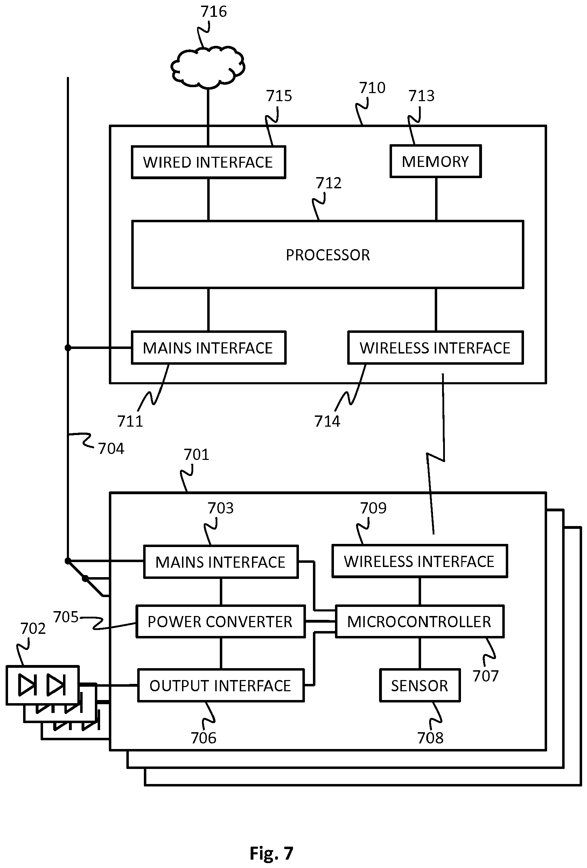

Fig. 7 illustrates schematically some components of a building automation system that are configured to set up a wireless mesh network when deployed to operate within a building. In particular, a majority of the nodes of the building automation system in fig. 7 are luminaires, for which the system may also be called a lighting system. Each luminaire comprises a driver device 701 and light sources 702. The driver device 701 comprises a mains interface 703 configured to draw operating power from a mains network 704, a power converter 705 configured to convert the mains power into suitable output power for the light sources 702, and an output interface 706 configured to deliver the output power to the light sources 702 in suitable amounts. The driver device 701 comprises also a microcontroller 707 configured to control the operation of the blocks mentioned above, as well as a sensor 708 coupled to provide the microcontroller 707 with sensor data such as measured illumination level. Additionally the driver device comprises a wireless interface 709 coupled to serve as the wireless communications means for the microcontroller 707.

A controlling device 710 of the building automation system, also configured to act as a controlling device of the wireless mesh network, comprises a mains interface 711 configured to draw operating power from the mains network 704 and to convert it into operating power for the other parts of the controlling device 710. A processor 712 is coupled to a memory 713, a part of which is a program memory for storing machine-readable instructions, wherein at least one set of said machine-readable instructions are configured to make, when executed by the processor 712 and/or by other processor(s) of said controlling device, the controlling device 710 execute a method comprising the steps that have been explained earlier in this text. Additionally the controlling device 710 comprises a wireless interface 714 coupled to serve as the wireless communications means for the processor 712, as well as a wired interface 715 coupled to serve as the wired communications means that link the processor to external networks 716 like the Internet. The double interfaces 714 and 715 allow the controlling device 710 to act as a gateway for the wireless mesh network formed by the driver devices 701 of the luminaires.

A user interface for allowing a user to give controlling commands to and receive feedback from the controlling device 710 can be set up for example so that the user has an user interface application running in a mobile device, which can communicate with the controlling device 710 using the wireless interface 714. An alternative way is to set up the user interface through suitable software means executed in a computer that has a communications connection with the controlling device 710 through the external network 716.

Components illustrated within the driver device 701 in fig. 7 can be arranged differently: it is not uncommon that a driver device of a luminaire comprises only the blocks 703, 705, 706, and 707, so that sensors, wireless interfaces, and possibly other additional functional blocks are external to the driver device and coupled to it with local wiring and/or local short-distance wireless communications. Some functional blocks, like the sensor 708 for example, may be physically located together with the light sources 702 in a module, in which case the output interface 706 would actually be a bidirectional interface. Even the microcontroller 707, on the responsibility of which is the execution of the node-specific parts of the method explained above, can be located elsewhere than within the driver device. One possible arrangement is such where blocks 702, 703, 705, and 706 constitute one physical unit and blocks 707, 708, and 709 constitute another, separate physical unit.

Changes and modifications are possible also among the functional blocks illustrated in fig. 7 as parts of the controlling device 710, for example so that there are two processors, each with its own program memory and linked together through a communications bus, and one of them is responsible for communications over the wired interface 715 and the external network 716 while the other is responsible for communications over the wireless interface 714 and the nodes of the wireless mesh network. Yet another arrangement is one where the gateway node of the wireless mesh network comprises only the wireless and wired interfaces 715 as well as a very simple processor with limited program memory, so that the simple processor is only meant for executing bidirectional conversions between wireless transmissions in the wireless mesh networks and (long-distance wireless, or) wired transmissions in the external network 716. In such an embodiment all the actual intelligence that is needed to e.g. execute a method of the present invention is located in another computer somewhere in the external network 716.

For the purposes of the present invention the exact arrangement of the functional blocks has little significance.

Possible variations and modifications to the explained examples of the method involve e.g. the distribution of the method steps over a significant period of time. Instead of performing a short, concentrated, and dedicated ranging episode for the purposes of finding an optimal location for a particularly important node the network may actually utilize even the regular messages transmitted in the wireless mesh network for the claimed purpose. In other words, messages that originally had some other meaning than ranging may contain, as a kind of additional payload, an identifier of an originator of the message and a value of an indicator of cumulative communications quality along the route the message has taken through the wireless mesh network. The controlling device could maintain statistics about the collected values indicative of cumulative communications quality that it gathers along the way when the wireless mesh network operates. A suggestion for the most optimal location for the particularly important node could then be queried and obtained at any time from the controlling device.

The controlling device may keep track of which nodes of the wireless mesh network have acted sufficiently often as originating nodes for such a purpose, and augment the statistics by particularly instructing such nodes to transmit ranging messages from which an insufficient number of regular messages have been received.

## Claims

1. A method for selecting a location for a particularly important node of a wireless mesh network, the method comprising:
- instructing existing individual nodes of the wireless mesh network to operate as respective individual originator nodes that each transmit a known number of separate ranging messages, wherein a ranging message contains at least an identifier of an originator of the ranging message,
- collecting, from a number of other nodes of the wireless mesh network, the numbers of ranging messages that said other nodes have received successfully from said individual originator nodes,
- comparing said individual originator nodes of said wireless mesh network with respect to how large a proportion of their transmitted ranging messages were successfully received by the other nodes, and
- selecting the location for the particularly important node to coincide with the location of that one of the compared individual originator nodes that was the originator of ranging messages of which the largest proportion was successfully received by the other nodes.

2. A method according to claim 1, wherein:
- the method comprises automatically triggering the execution of the steps of the method at the occurrence of a predetermined triggering condition.

3. A method according to claim 2, wherein said predetermined triggering condition is the expiry of a timer.

4. A method according to claim 2, wherein said predetermined triggering condition is an observed change in communications quality reported by at least one node of the wireless mesh network.

5. A method according to any of the preceding claims, comprising:
- receiving from a user a preliminary selection of one or more possible locations for the particularly important node, and
- only instructing those existing nodes of the wireless mesh network to transmit ranging messages that are located at or close to said one or more possible locations.

6. A method according to any of the preceding claims, wherein:
- the nodes of the wireless mesh network are devices of a building automation system, and
- the method comprises finding the location for at least one of: a sensor node, a controller node, a gateway between said building automation system and an external communications network.

7. A controlling device of a wireless mesh network, comprising a program memory for storing machine-readable instructions, wherein at least one set of said machine-readable instructions are configured to make, when executed by one or more processors of said controlling device, the controlling device execute a method comprising the steps of at least one of the preceding claims.

8. A computer program, comprising one or more sets of machine-readable instructions that are configured to cause, when executed by one or more processors, the execution of a method comprising the steps of at least one of claims 1 to 6.

## Patentansprüche

1. Verfahren zum Auswählen eines Standorts für einen besonders wichtigen Knoten eines drahtlosen Maschennetzwerks, wobei das Verfahren Folgendes umfasst:
- Anweisen vorhandener einzelner Knoten des drahtlosen Maschennetzwerks, als jeweilige einzelne Absenderknoten zu arbeiten, die jeweils eine bekannte Anzahl separater Entfernungsnachrichten senden, wobei eine Entfernungsnachricht mindestens eine Kennung eines Absenders der Entfernungsnachricht enthält,
- Sammeln der Anzahl von Entfernungsnachrichten, die die anderen Knoten erfolgreich von den einzelnen Absenderknoten erhalten haben, von einer Anzahl anderer Knoten des drahtlosen Maschennetzwerks,
- Vergleichen der einzelnen Absenderknoten des drahtlosen Maschennetzwerks hinsichtlich des Ausmaßes, in dem ein Teil ihrer übertragenen Entfernungsnachrichten von den anderen Knoten erfolgreich empfangen wurde, und
- Auswahl des Standorts für den besonders wichtigen Knoten, der mit dem Standort des einen der verglichenen einzelnen Absenderknoten übereinstimmt, der der Absender von Entfernungsnachrichten war, von denen der größte Anteil erfolgreich von den anderen Knoten empfangen wurde.

2. Verfahren nach Anspruch 1, wobei:
- das Verfahren das automatische Auslösen der Ausführung der Schritte des Verfahrens beim Auftreten einer vorbestimmten Auslösebedingung umfasst.

3. Verfahren nach Anspruch 2, wobei die vorbestimmte Auslösebedingung das Ablaufen eines Zeitgebers ist.

4. Verfahren nach Anspruch 2, wobei die vorbestimmte Auslösebedingung eine beobachtete Änderung der Kommunikationsqualität ist, die von mindestens einem Knoten des drahtlosen Maschennetzwerks gemeldet wird.

5. Verfahren nach einem der vorhergehenden Ansprüche, umfassend:
- Erhalten einer vorläufigen Auswahl eines oder mehrerer möglicher Standorte für den besonders wichtigen Knoten von einem Benutzer, und
- Anweisen nur die vorhandenen Knoten des drahtlosen Maschennetzwerks, Entfernungsnachrichten zu senden, die sich an dem oder in der Nähe des einen oder der mehreren möglichen Standorte befinden.

6. Verfahren nach einem der vorhergehenden Ansprüche, wobei:
- die Knoten des drahtlosen Maschennetzwerks Vorrichtungen eines Gebäudeautomationssystems sind, und
- das Verfahren Finden des Standorts für mindestens eines von: einem Sensorknoten, einem Steuerknoten, einem Gateway zwischen dem Gebäudeautomationssystem und einem externen Kommunikationsnetz umfasst.

7. Steuervorrichtung eines drahtlosen Maschennetzwerks, umfassend einen Programmspeicher zum Speichern von maschinenlesbaren Anweisungen, wobei mindestens ein Satz der maschinenlesbaren Anweisungen konfiguriert ist, um bei Ausführung durch einen oder mehrere Prozessoren der Steuervorrichtung zu bewirken, dass die Steuervorrichtung ein Verfahren ausführt, das die Schritte von mindestens einem der vorhergehenden Ansprüche umfasst.

8. Computerprogramm, umfassend einen oder mehrere Sätze von maschinenlesbaren Anweisungen, die konfiguriert sind, um bei Ausführung durch einen oder mehrere Prozessoren die Ausführung eines Verfahrens zu bewirken, das die Schritte von mindestens einem der Ansprüche 1 bis 6 umfasst.

## Revendications

1. Procédé pour sélectionner un emplacement pour un nœud particulièrement important d'un réseau maillé sans fil, le procédé comprenant :
- le fait d'ordonner à des nœuds individuels existants du réseau maillé sans fil de fonctionner en tant que nœuds expéditeurs individuels respectifs qui transmettent chacun un nombre connu de messages de télémétrie distincts, dans lequel un message de télémétrie contient au moins un identifiant d'un expéditeur du message de télémétrie,
- la collecte, à partir d'un certain nombre d'autres nœuds du réseau maillé sans fil, du nombre de messages de télémétrie que lesdits autres nœuds ont reçus avec succès desdits nœuds expéditeurs individuels,
- la comparaison desdits nœuds expéditeurs individuels dudit réseau maillé sans fil par rapport à la forte proportion de leurs messages de télémétrie transmis qui ont été reçus avec succès par les autres nœuds, et
- la sélection de l'emplacement du nœud particulièrement important pour coïncider avec l'emplacement de celui des nœuds expéditeurs individuels comparés qui était l'expéditeur des messages de télémétrie dont la plus grande proportion a été reçue avec succès par les autres nœuds.

2. Procédé selon la revendication 1, dans lequel :
- le procédé comprend le déclenchement automatique de l'exécution des étapes du procédé à l'apparition d'une condition de déclenchement prédéterminée.

3. Procédé selon la revendication 2, dans lequel ladite condition de déclenchement prédéterminée est l'expiration d'un temporisateur.

4. Procédé selon la revendication 2, dans lequel ladite condition de déclenchement prédéterminée est un changement observé dans la qualité des communications signalé par au moins un nœud du réseau maillé sans fil.

5. Procédé selon l'une quelconque des revendications précédentes, comprenant :
- la réception d'un utilisateur d'une sélection préliminaire d'un ou de plusieurs emplacements possibles pour le nœud particulièrement important, et
- le fait d'ordonner uniquement aux nœuds existants du réseau maillé sans fil de transmettre des messages de télémétrie qui sont situés au niveau ou à proximité desdits un ou plusieurs emplacements possibles.

6. Procédé selon l'une quelconque des revendications précédentes, dans lequel :
- les nœuds du réseau maillé sans fil sont des dispositifs d'un système immotique, et
- le procédé comprend la recherche de l'emplacement pour au moins l'un parmi : un nœud de capteur, un nœud de contrôleur, une passerelle entre ledit système immotique et un réseau de communication externe.

7. Dispositif de commande d'un réseau maillé sans fil, comprenant une mémoire de programme pour stocker des instructions lisibles par machine, dans lequel au moins un ensemble desdites instructions lisibles par machine est configuré pour amener, lorsqu'il est exécuté par un ou plusieurs processeurs dudit dispositif de commande, le dispositif de commande à exécuter un procédé comprenant les étapes selon au moins l'une des revendications précédentes.

8. Programme informatique, comprenant un ou plusieurs ensembles d'instructions lisibles par machine qui sont configurés pour entraîner, lorsqu'il est exécuté par un ou plusieurs processeurs, l'exécution d'un procédé comprenant les étapes d'au moins l'une des revendications 1 à 6.
